# EUROPÄISCHE PATENTSCHRIFT

(11) **EP 0 565 564 B1**
(45) Veröffentlichungstag und Bekanntmachung des Hinweises auf die Patenterteilung: **14.09.1994**
(21) Anmeldenummer: 92901750.7
(22) Anmeldetag: 30.12.1991
(51) Int. Cl.: B61C 9/52, F16D 3/60

(54) **KUPPLUNG**
COUPLING
ACCOUPLEMENT

(30) Priorität: 07.01.1991 DE 4100168
(43) Veröffentlichungstag der Anmeldung: 20.10.1993
(73) Patentinhaber: Chivari, Ilie, F-59300 Valenciennes (FR)
(72) Erfinder: Chivari, Ilie, F-59300 Valenciennes (FR)
(74) Vertreter: Weisse, Jürgen, Dipl.-Phys. Patentanwalt
(86) Internationale Anmeldenummer: EP9102524
(87) Internationale Veröffentlichungsnummer: WO9212034

(56) Entgegenhaltungen:
- DE-A- 3 049 054

## Beschreibung

Die Erfindung betrifft eine Kupplung zum Kuppeln achsversetzter umlaufender Teile mit einer antriebseitigen und einer abtriebseitigen Kupplungshälfte und einem Kupplungszwischenglied, das über ein erstes Paar von zentralsymmetrisch zueinander angeordneten Lenkern mit der antriebseitigen Kupplungshälfte und über ein zweites Paar von zentralsymmetrisch zueinander angeordneten Lenkern mit der abtriebseitigen Kupplungshälfte verbunden ist, bei welcher
(a) das Kupplungszwischenglied von zwei bogenförmigen, lösbar miteinander verbundenen Zwischengliedhälften gebildet ist, die
   - jede eine seitliche Öffnung bilden, welche ein seitliches Abnehmen der Zwischengliedhälfte von einer zentral durch die Kupplung hindurchgehenden Welle gestattet und
   - um 180° gegeneinander winkelversetzt sind, so daß die Öffnung jeder Zwischengliedhälfte mit dem geschlossenen Mittelbereich der anderen Zwischengliedhälfte fluchtet.

Eine solche Kupplung ist bekannt durch die DE-A-30 49 054.

Der Antrieb erfolgt dabei über die Lenker und das nicht gelagerte Kupplungszwischenglied. Die Kupplung gestattet einen Achsversatz zwischen den umlaufenden Teilen. Dabei führt das Kupplungszwischenglied eine kreisende Ausgleichsbewegung aus. Zur Verwendung bei Bahnantrieben ist das Kupplungszwischenglied ein Ring, der eine Welle umgibt. Um eine Demontage der Kupplung zu ermöglichen, ohne dazu das auf der Welle sitzende Rad demontieren zu müssen, ist nach der DE-A-30 49 054 das Zwischenglied in einer Längsebene quer zur Achse in zwei Hälften geteilt, die durch sekantial angeordnete Schrauben lösbar miteinander verbunden sind. Nach dem Lösen der Schrauben kann dann das Kupplungszwischenglied zur Seite von der Welle abgenommen werden. Dabei ist aber die Demontage des Kupplungszwischengliedes durch Lenker erschwert. Weiterhin ist die Ausgleichsbewegung des Kupplungszwischengliedes bei der bekannten Konstruktion ziemlich stark. Solche Ausgleichsbewegungen führen zu Unwuchtkräften.

Der Erfindung liegt daher die Aufgabe zugrunde, die Demontage einer Kupplung der eingangs definierten Art zu erleichtern.

Erfindungsgemäß wird diese Aufgabe dadurch gelöst, daß
(b) die beiden Zwischengliedhälften axial gegeneinander versetzt sind,
(c) die Zwischengliedhälften sich jeweils über mehr als 180° erstrecken und sich in Umfangsrichtung überlappende Teile aufweisen und
(d) diese Teile durch axiale Schrauben miteinander verbunden sind.

Ausgestaltungen der Erfindung sind Gegenstand der Unteransprüche.

Zwei Ausführungsbeispiele der Erfindung sind nachstehend unter Bezugnahme auf die zugehörigen Zeichnungen näher erläutert.
- Fig. 1: ist eine Endansicht einer Kupplung, bei welcher eine antriebseitige Kupplungshälfte mit einer Abtriebseitigen Kupplungshälfte über ein Kupplungszwischenglied und Lenker gekuppelt ist.
- Fig.2: zeigt einen Schnitt längs der Linie C - D von Fig.1.
- Fig.3: zeigt eine Zwischengliedhälfte eines Kupplungszwischengliedes bei der Ausführung von Fig.1 und 2.
- Fig.4: ist eine Seitenansicht "X" der Zwischengliedhälfte von Fig.3, wobei die andere Zwischengliedhälfte gestrichelt angedeutet ist.
- Fig.5: zeigt in einer Darstellung ähnlich Fig.4 eine abgewandelte Ausführung des Kupplungszwischengliedes.

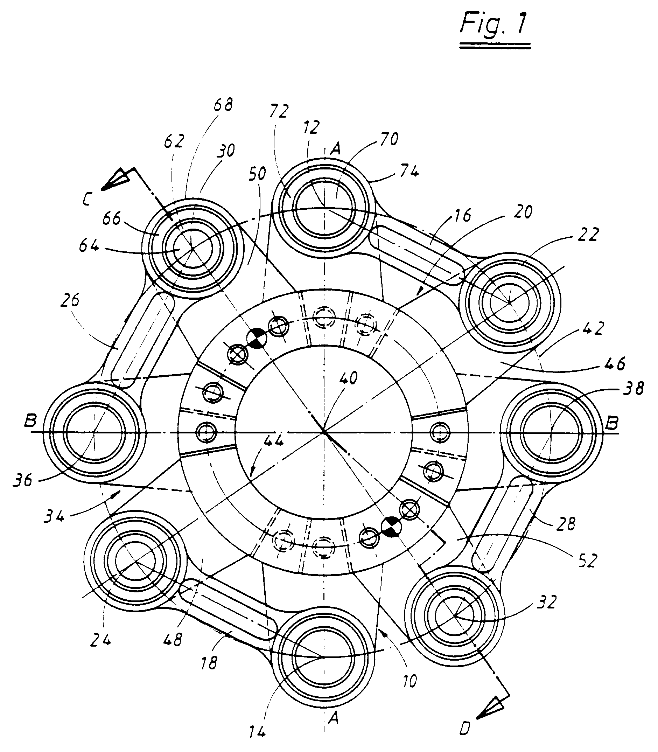

In Fig.1 ist mit 10 eine antriebseitige Kupplungshälfte bezeichnet. Von der antriebseitigen Kupplungshälfte 10 erstrecken sich zwei zentralsymmetrisch angeordnete und um diametral gegenüberliegende Schwenkachsen 12 und 14 schwenkbar angelenkte Lenker 16 bzw. 18 im Uhrzeigersinn. Die Lenker 16 und 18 sind an einem Kupplungszwischenglied 20 um Schwenkachsen 22 bzw. 24 schwenkbar angelenkt. An dem Kupplungszwischenglied 20 sind wiederum zwei zentralsymmetrisch angeordnete Lenker 26 und 28 um diametral gegenüberliegende Schwenkachsen 30 bzw 32 schwenkbar angelenkt. Die Lenker 26 und 28 erstrecken sich von dem Kupplungszwischenglied 20 entgegen dem Uhrzeigersinn. Die Lenker 26 und 28 sind an einer abtriebseitigen Kupplungshälfte 34 um Schwenkachsen 36 bzw. 38 schwenkbar angelenkt.

Bei der in Fig.1 dargestellten Mittelstellung, in welcher die Umlaufachsen der antriebseitigen Kupplungshälfte 10, des Kupplungszwischengliedes 20 und der abtriebseitigen Kupplungshälfte 34 in einer gemeinsamen Achse 40 zusammenfallen, ergeben sich folgende geometrischen Verhältnisse: Die Schwenkachsen 12, 14, 22, 24, 30, 32, 36 und 38 liegen alle auf einem gedachten Zylinder 42 um die Achse 40. Die Schwenkachsen 30 und 32 sind gegenüber den Schwenkachsen 22 bzw. 24 um jeweils 90° winkelversetzt. In ähnlicher Weise sind die Schwenkachsen 36 und 38 der abtriebseitigen Kupplungshälfte 34 gegenüber den Schwenkachsen 12 bzw. 14 der antriebseitigen Kupplungshälfte 10 um jeweils 90° winkelversetzt. Die Lenker 16, 18, 26 und 28 sind alle gleich lang und erstrecken sich sekantial zu dem Querschnittskreis des Zylinders 42. Das Kupplungszwischgenglied 20 weist einen inneren Ringteil 44 auf. Von dem Ringteil 44 erstrecken sich vier radiale Arme 46, 48, 50 und 52, an denen die Lenker 16, 18, 26 bzw. 28 angelenkt sind.

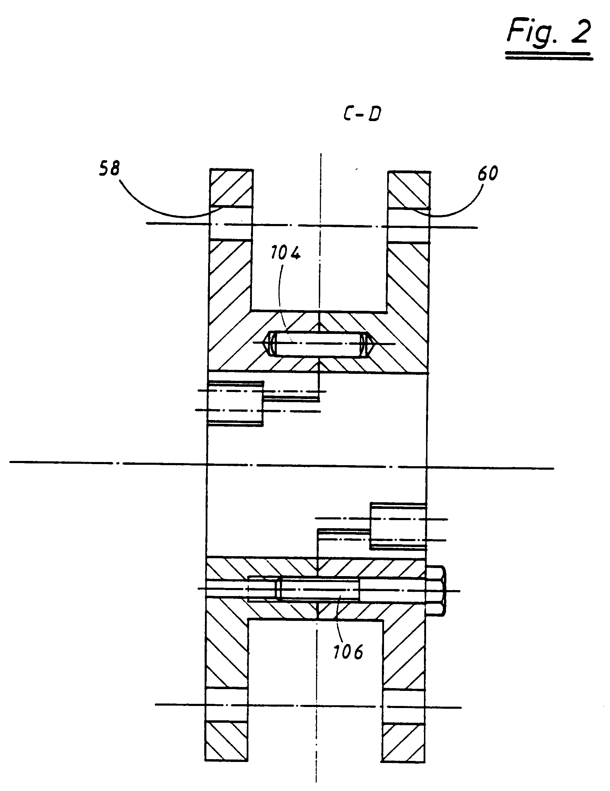

Wie aus Fig.2 ersichtlich ist, besteht jeder Arm, z.B. 50, aus zwei in axialem Abstand voneinander angeordneten Laschen mit fluchtenden Bohrungen 58 bzw. 60. Zwischen den Laschen erstreckt sich eine Abstandshülse 62. Zentral durch die Bohrungen 58 und 60 und die Abstandshülse 62 ist ein Gewindebolzen 64 geführt, der die Laschen gegen die Abstandshülse 62 festzieht. Auf der Abstandshülse 62 sitzt ein Schwingmetallring 66 der in einem Auge 68 des Lenkers gehaltert ist.

An den antriebseitigen und abtriebseitigen Kupplungshälften sitzen axiale Zapfen, z.B. 70. Auf den Zapfen 70 sitzen Schwingmetallringe 72. Die Schwingmetallringe 72 sind in Augen 74 an den kupplungshälftenseitigen Enden der Lenker gehalten.

Durch das Innere des Ringteils 44 kann eine Welle hindurchgeführt sein. Es gilt, die Kupplung so auszubilden, daß sie demontiert werden kann, ohne etwa ein auf der Welle sitzendes Rad ausbauen zu müssen. Das ist z.B. wichtig bei der Anwendung der Kupplung zum Antrieb von Schienenfahrzeugen. Die antriebseitige Kupplungshälfte sitzt dann an einer Hohlwelle eines Getriebes. abtriebseitige Kupplungshälfte ist ein Rad, das auf einer zentral durch die Kupplung hindurchgeführten Welle sitzt. Die Kupplung sollte dann zur Seite hin ausbaubar sein.

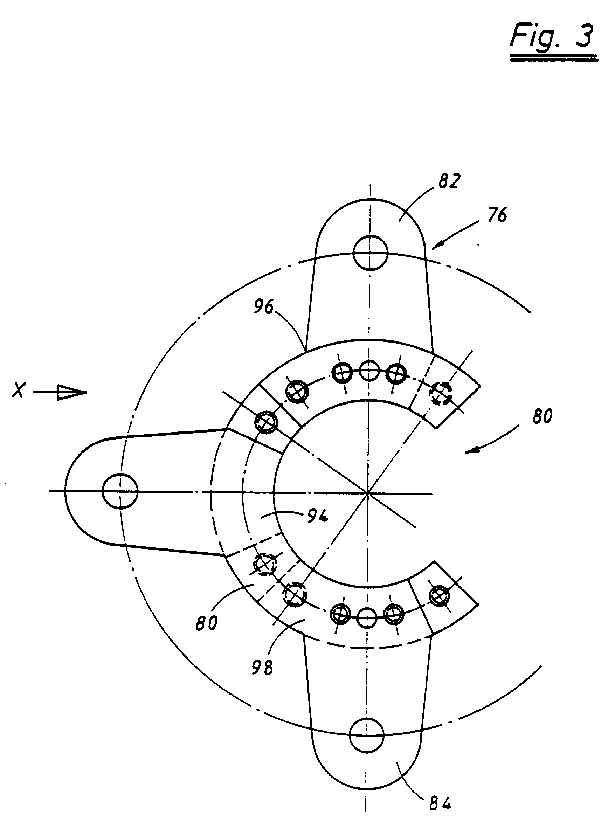

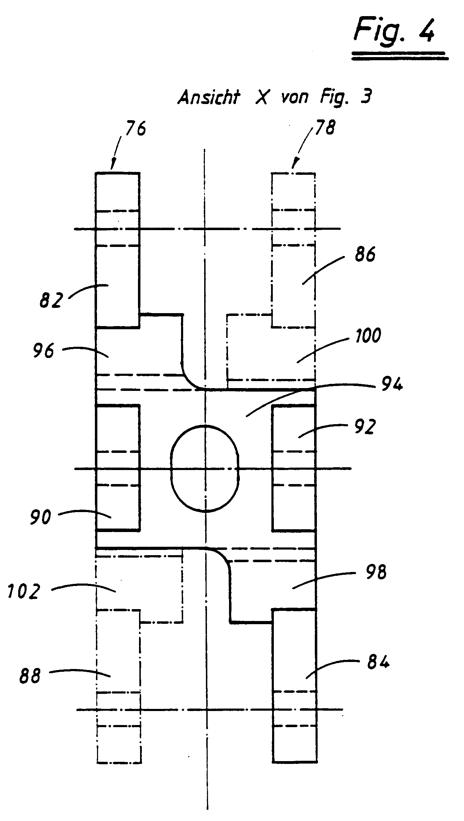

In Fig.3 und 4 ist der Aufbau des Kupplungszwischengliedes 20 dargestellt, der einen solchen seitlichen Ausbau gestattet. Das Kupplungszwischenglied 20 besteht aus zwei Zwischengliedhälften 76 und 78, von denen in Fig.4 die Zwischengliedhälfte 78 gestrichelt angedeutet ist. In Fig.3 ist nur die Zwischengliedhälfte 76 dargestellt. Die Zwischengliedhälfte 78 ist übereinstimmend ausgebildet und in einer gegen die Zwischengliedhälfte 76 um 180° verdrehten Stellung mit der Zwischengliedhälfte 76 zusammengesetzt.

Die Zwischengliedhälften 76 und 78 erstrecken sich über jeweils mehr als 180°, so daß jede eine seitliche Öffnung 80 bildet, die ein seitliches Abnehmen der Zwischengliedhälfte 76 oder 78 von einer zentral durch die Kupplung hindurchgehenden Welle gestattet. Die Zwischengliedhälften 76 und 78 sind axial gegeneinander versetzt angeordnet und um 180° gegeneinander winkelversetzt sind, so daß die Öffnung 80 jeder Zwischengliedhälfte 76 oder 78 mit dem geschlossenen Mittelbereich der anderen Zwischengliedhälfte 78 bzw. 76 fluchtet. Jede Zwischengliedhälfte, z.B. 76 weist im Bereich ihrer Enden ein Paar von um 180° winkelversetzten radialen ersten Laschen 82 und 84 auf, von denen jede mit einer entsprechenden Lasche 86 bzw. 88 der anderen Zwischengliedhälfte 78 fluchtet. Jede Zwischengliedhälfte 76 und 78 weist weiterhin in ihrem Mittel bereich ein Paar von fluchtenden zweiten Laschen 90 und 92 in axialem Abstand voneinander auf. Zwischen den fluchtenden ersten Laschen 82, 86 bzw. 84, 88 der ersten und der zweiten Zwischengliedhälfte 76 und 78 ist jeweils ein Schwenklager für die Lenker 26 bzw. 28 angebracht, die an der abtriebseitigen Kupplungshälfte 34 angelenkt sind. Das Laschenpaar 82, 86 bildet den radialen Arm 50. Das Laschenpaar 84, 88 bildet den radialen Arm 52 in Fig.1. Zwischen den fluchtenden zweiten Laschen 90, 92 der Zwischengliedhälfte 76 ist ein Schwenklager für den Lenker 18 angebracht, der an der antriebseitigen Kupplungshälfte 10 angelenkt ist. Ein entsprechendes Paar von zweiten Laschen ist an der Zwischengliedhälfte 78 hinten in Fig.4 vorgesehen. Die Laschen 90 und 92 bilden den Arm 48 in Fig.1. Die entsprechenden zweiten Laschen der Zwischengliedhälfte 78 bilden den Arm 46 in Fig.1.

Jede Zwischengliedhälfte 76, 78 weist einen zylinderschalenförmigen Mittelteil 94 im Bereich der Öffnung 80 der anderen Zwischengliedhälfte 78 bzw. 76 auf. Der zylinderschalenförmige Mittelteil 94 trägt die zweiten Laschen 90, 92 der Zwischengliedhälfte 76. An einem Ende des zylinderschalenförmigen Mittelteils 94 ist ein erster sich in Umfangsrichtung erstreckender, bogenförmiger Ansatz 96 vorgesehen, dessen axiale Abmessungen geringer sind als die Hälfte der axialen Ausdehnung des Mittelteils 94. An dem ersten Ansatz 96 sitzt eine der ersten radialen Laschen 82 der Zwischengliedhälfte 76. An dem anderen Ende des zylinderschalenförmigen Mittelteils 94 ist ein zweiter sich in Umfangsrichtung entgegengesetzt zu dem ersten Ansatz 96 erstreckender, bogenförmiger Ansatz 98 vorgesehen, dessen axiale Abmessungen geringer sind als die Hälfte der axialen Ausdehnung des Mittelteils 94. An dem zweiten Ansatz 98 sitzt die andere der ersten radialen Laschen 84 der Zwischengliedhälfte 76.

Wie aus Fig.2 und 4 ersichtlich ist, sind die Laschen 82 und 84 schmaler als die Ansätze 96 bzw. 98. Das gleiche gilt für die Laschen 86 und 88 der Zwischenstückhälfte 78. Die Ansätze 96 und 98 der Zwischengliedhälfte 76 und entsprechende Ansätze 100 und 102 überlappen sich im Bereich der Laschen 82 und 86 bzw. 84 und 88. Wie aus Fig.2 am besten ersichtlich ist, sind die Ansätze dort durch Zentrierstifte 104 und axiale Schrauben 106 miteinander verbunden. Der Mittelteil 94 jeder der beiden Zwischenstückhälften 76 und 78 paßt sich in die Öffnung 80 der jeweils anderen Zwischenstückhälfte ein.

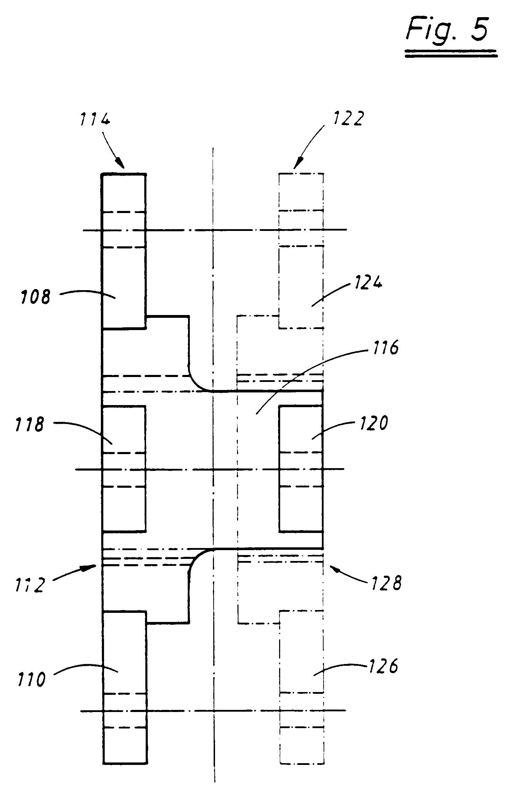

In Fig.5 ist eine abgewandelte Ausführung des Zwischenstücks in ähnlicher Darstellung gezeigt wie in Fig.4.

Bei der Ausführung nach Fig.5 sind die Laschen 108 und 110 im Bereich der Enden des Ringteils 112 der Zwischengliedhälfte 114 an der gleichen, in Fig.5 linken Stirnfläche der Zwischengliedhälfte 114 vorgesehen. An dem Mittelteil 116 sind im rechten Winkel zu den Laschen 108 und 110 fluchtende Laschen 118 und 120 angebracht. In entsprechender Weise sind bei der anderen Zwischengliedhälfte 122 die Laschen 124, 126 im Bereich der Enden des Ringteils 128 an der gleichen, in Fig.5 rechten Stirnfläche der Zwischengliedhälfte 122 vorgesehen. Auch hier sind an dem in Fig.5 hinter der Papierebene liegenden, nicht sichtbaren Mittelteil der Zwischengliedhälfte 122 im rechten Winkel zu den Laschen 124 und 126 fluchtende Laschen vorgesehen, die nach hinten in Fig.5 ragen.

## Patentansprüche

1. Kupplung zum Kuppeln achsversetzter umlaufender Teile mit einer antriebseitigen (10) und einer abtriebseitigen (34) Kupplungshälfte und einem Kupplungszwischenglied (20), das über ein erstes Paar (16,18) von zentralsymmetrisch zueinander angeordneten Lenkern mit der antriebseitigen Kupplungshälfte (10) und über ein zweites Paar (26,28) von zentralsymmetrisch zueinander angeordneten Lenkern mit der abtriebseitigen Kupplungshälfte (34) verbunden ist, bei welcher
(a) das Kupplungszwischenglied (20) von zwei bogenförmigen, lösbar miteinander verbundenen Zwischengliedhälften (76,78) gebildet ist, die
- jede eine seitliche Öffnung (80) bilden, welche ein seitliches Abnehmen der Zwischengliedhälfte (76,78) von einer zentral durch die Kupplung hindurchgehenden Welle gestattet und
- um 180° gegeneinander winkelversetzt sind, so daß die Öffnung (80) jeder Zwischengliedhälfte (76,78) mit dem geschlossenen Mittelbereich der anderen Zwischengliedhälfte (78,76) fluchtet,
**dadurch gekennzeichnet, daß**
(b) die beiden Zwischengliedhälften (76,78) axial gegeneinander versetzt sind,
(c) die Zwischengliedhälften (76,78) sich jeweils über mehr als 180° erstrecken und sich in Umfangsrichtung überlappende Teile (96,98;100,102) aufweisen und
(d) diese Teile (96,98;100,102) durch axiale Schrauben (106) miteinander verbunden sind.

2. Kupplung nach Anspruch 1, **dadurch gekennzeichnet, daß** jede Zwischengliedhälfte (76,78) im Bereich ihrer Enden ein Paar von um 180° winkelversetzten radialen ersten Laschen (82,84;86,88) aufweist, von denen jede mit einer entsprechenden Lasche (86,88;82,84) der anderen Zwischengliedhälfte (78,76) fluchtet.

3. Kupplung nach Anspruch 2, **dadurch gekennzeichnet, daß** an den fluchtenden ersten Laschen der ersten und der zweiten Zwischengliedhälfte (67,78) jeweils ein Schwenklager für die Lenker (26,28) angebracht ist, die an der einen Kupplungshälfte (34) angelenkt sind.

4. Kupplung nach Anspruch 3 , **dadurch gekennzeichnet, daß**
(a) jede Zwischengliedhälfte (76,78) weiterhin in ihrem Mittelbereich ein Paar von fluchtenden zweiten Laschen in axialem Abstand voneinander aufweist und
(b) zwischen den fluchtenden zweiten Laschen (90,92) jeweils ein Schwenklager für die Lenker (16,18) angebracht ist, die an der anderen Kupplungshälfte (10) angelenkt sind.

5. Kupplung nach Anspruch 3, **dadurch gekennzeichnet, daß** von den ersten Laschen (82,84) jeder Zwischengliedhälfte (76,78) die eine (82) im Bereich der einen Stirnfläche der Zwischengliedhälfte (76,78) und die andere (84) im Bereich der gegenüberliegenden anderen Stirnfläche der Zwischengliedhälfte (76,78) angeordnet ist.

6. Kupplung nach Anspruch 3, **dadurch gekennzeichnet, daß**
(a) jede Zwischengliedhälfte (76,78) einen zylinderschalenförmigen Mittelteil (94) im Bereich der Öffnung (80) der anderen Zwischengliedhälfte (78,76) aufweist,
(b) der zylinderschalenförmige Mittelteil (94) die zweiten Laschen der Zwischengliedhälfte (76,78) trägt,
(c) an einem Ende des zylinderschalenförmigen Mittelteils (94) ein erster sich in Umfangsrichtung erstreckender, bogenförmiger Ansatz (96) vorgesehen ist, dessen axiale Abmessungen geringer sind als die Hälfte der axialen Ausdehnung des Mittelteils (94),
(d) an dem ersten Ansatz (96) eine der ersten radialen Laschen der Zwischengliedhälfte (76,78) sitzt,
(e) an dem anderen Ende des zylinderschalenförmigen Mittelteils (94) ein zweiter sich in Umfangsrichtung entgegengesetzt zu dem ersten Ansatz (96) erstreckender, bogenförmiger Ansatz (98) vorgesehen ist, dessen axiale Abmessungen geringer sind als die Hälfte der axialen Ausdehnung des Mittelteils (94), und
(f) an dem zweiten Ansatz (96) die andere der ersten radialen Laschen der Zwischengliedhälfte (76,78) sitzt.

## Claims

1. Coupling adapted to couple rotating elements with offset axes and having a driving-side (10) and a driven-side (34) coupling half and an intermediate coupling member (20), which is connected through a pair (16,18) of links arranged centro-symmetrical to each other with the driving-side coupling half (10), and is connected through a second pair (26,28) of links arranged centro-symmetrical to each other with the driven-side coupling half (34), wherein
(a) the intermediate coupling member (20) is formed by two arcuate, releasably interconnected intermediate member halves (76,78), which
- each define a lateral opening (80), which permits lateral removal of the intermediate member half (76,78) from a shaft passing centrally through the coupling, and
- are angularly offset by 180°, whereby the opening (80) of each intermediate member half (76,78) is aligned with the closed central portion of the other intermediate member half (78,76),
**characterized in that**
(b) the two intermediate member halves (76,78) are axially offset with respect to each other,
(c) the intermediate member halves (76,78) extend through more than 180° each and have portions (96,98;108,102) overlapping circumferentially, and
(d) these portions(96,98;108,102) are interconnected by axial screws (106).

2. Coupling as claimed in claim , **characterized in that** each intermediate member half (76,78) has a pair of radial first lugs (82,84;86,88) angularly offset by 180°, each of which is aligned with a corresponding lug (86,88;82,84) of the other intermediate member half (78,76).

3. Coupling as claimed in claim 2, **characterized in that** pivot bearings for the links (26,28) which are pivoted on the second coupling half (34) are attached to each of the aligned, first lugs of the first and second intermediate member halves (67,78).

4. Coupling as claimed in claim 3, **characterized in that**
(a) each intermediate member half (76,78), furthermore, has a pair of axially spaced, aligned lugs in its middle portion and
(b) pivot bearings for the links (16,18) pivoted on the other coupling half (10) are attached between the respective aligned second lugs (90,92).

5. Coupling as claimed in claim 3, **characterized in that** of the first lugs (82,84) of each intermediate member half (76,78) one (82) is arranged in the region of one end face of the intermediate member half (76,78), and the other one (84) is arranged in the region of the other end face of the intermediate member half (76,78).

6. Coupling as claimed in claim 3, **characterized in that**
(a) each intermediate member half (76,78) has a sectional hollow-cylindrical center portion (94) in the region of the opening (80) of the other intermediate member half (76,78),
(b) the sectional hollow-cylindrical center portion (94) carries the second lugs of the intermediate member half (76,78),
(c) a first, arcuate, peripherally extending projection (96) is provided at one end of the sectional hollow-cylindrical center portion (94), the axial dimensions of the projection being smaller than half the axial dimension of the center portion (94),
(d) one of the first radial lugs of the intermediate member half (76,78) is provided on the first projection (96),
(e) a second, arcuate projection (98) is provided at the other end of the sectional hollow-cylindrical center portion (94) and extends peripherally in opposition to the first projection (96), the axial dimensions of the second projection being smaller than half the axial dimension of the center portion (94), and
(f) the other one of the first radial lugs of the intermediate member half (76,78) is provided on the second projection (96).

## Revendications

1. Dispositif d'accouplement destiné à accoupler des éléments rotatifs décalés axialement, qui est muni d'un demi-accouplement du côté d'entraînement (10) et d'un demi-accouplement du côté de dérive (34) et d'un élément intermédiaire d'accouplement (20) relié par une première paire (16,18) de bielles disposées à symmétrie centrale au demi-accouplement du côté d'entraînement (10), et par une seconde paire (26,28) de bielles disposées à symmétrie centrale au demi-accouplement du côté de dérive (34), dans lequel
(a) l'élément intermédiaire d'accouplement (20) est formé par deux moitiés d'élément intermédiaire (76,78) en forme d'arc et reliées l'une à l'autre de manière détachable, et qui
- forment une ouverture latérale (80) chacune, permettant d'enlever la moitié d'élément intermédiaire (76,78) latéralement d'un arbre passant centralement à travers le dispositif d'accouplement, et
- qui sont angulairement décalées l'une à l'autre de 180° de sorte que l'ouverture (80) de chaque moitié d'élément intermédiaire (76,78) est alignée sur le domaine central fermé de l'autre moitié d'élément intermédiaire (78,76),
**caractérisé par le fait que**
(b) les deux moitiés d'élément intermédiaire (76,78) sont axialement décalées l'une à l'autre,
(c) les moitiés d'élément intermédiaire (76,78) s'étendent sur plus de 180° chacune, et présentent des éléments (96,98;100,102) se chevauchant dans la direction circonférentielle, et
(d) ces éléments (96,98;100,102) sont reliés par des vis axiaux (106).

2. Dispositif d'accouplement selon la revendication 1, **caractérisé par le fait que** chaque moitié d'élément intermédiaire (76,78) présente, dans le domaine de ses extrémités, une paire de premières éclisses radiales (82,84; 86, 88) angulairement décalées de 180°, dont chacune est alignée sur une éclisse correspondante (86,88;82,84) de l'autre moitié d'élément intermédiaire (78,76).

3. Dispositif d'accouplement selon la revendication 2, **caractérisé par le fait qu'**un palier de pivotement à la fois pour les bielles (26,28) est monté sur les premières éclisses alignées de la première et de la seconde moitié d'élément intermédiaire (67,78), bielles qui sont articulées sur l'un des demi-accouplements (34).

4. Dispositif d'accouplement selon la revendication 3, **caractérisé par le fait que**
(a) chaque moitié d'élément intermédiaire (76,78) présente, en outre, une paire de secondes éclisses dans sa zone centrale à écart axiale l'une de l'autre, et
(b) un palier de pivotement à la fois pour les bielles (16,18) est monté entre les secondes éclisses (90,92) alignées, bielles qui sont articulées à l'autre demi-accouplement (10).

5. Dispositif d'accouplement selon la revendication 3, **caractérisé par le fait que** l'une (82) des premières éclisses (82,84) de chaque moitié d'élément intermédiaire (76,78) est disposée dans le domaine de l'un des fronts de la moitié d'élément intermédiaire (76,78), et l'autre (84) est disposée dans le domaine de l'autre front opposé de la moitié d'élément intermédiaire (76,78).

6. Dispositif d'accouplement selon la revendication 3, **caractérisé par le fait que**
(a) chaque moitié d'élément intermédiaire (76,78) présente une partie centrale (94) en forme de cuvette cylindrique dans le domaine de l'ouverture (80) de l'autre moitié d'élément intermédiaire (78,76),
(b) la partie centrale (94) en forme de cuvette cylindrique porte les secondes éclisses de la moitié d'élément intermédiaire (78,76),
(c) un talon (96) en forme d'arc s'étendant dans la direction circonférentielle est prévu sur une extrémité de la partie centrale (94) en forme de cuvette cylindrique, talon dont les dimensions axiales sont inférieures à la moitié de l'extension axiale de la partie centrale (94),
(d) l'une des premières éclisses radiales de la moitié d'élément intermédiaire (76,78) est disposée sur le premier talon (96),
(e) un second talon (98) en forme d'arc s'étendant dans la direction circonférentielle opposée au premier talon (96) est prévu sur l'autre extrémité de la partie centrale (94) en forme de cuvette cylindrique, talon dont les dimensions axiales sont inférieures à la moitié de l'extension axiale de la partie centrale (94), et
(f) l'autre des premières éclisses radiales de la moitié d'élément intermédiaire (76,78) est disposée sur le second talon (96).
